# EUROPEAN PATENT APPLICATION

(11) **EP 4 575 246 A1**
(43) Date of publication of application: **25.06.2025**
(21) Application number: 24461644.7
(22) Date of filing: 13.12.2024
(51) Int. Cl.: F16C 3/02

(54) **AUTOMOTIVE DRIVE SHAFT MODULAR CONNECTOR**

(30) Priority: 14.12.2023 EP 23461689
(71) Applicant: Krawczyk, Maciej, 32-087 Garlica Murowana (PL)
(72) Inventor: Krawczyk, Maciej, 32-087 Garlica Murowana (PL)
(74) Representative: Czarnik, Maciej

(57) **Abstract**

A modular connector (1) for an automotive drive shaft, characterized in that the connector has a ring shape made of metal, preferably aluminum. The body (5) of the connector is equipped on one side with a profiled socket (2) matching the shape of the mounting of a mounting element, and on the opposite side, the connector is fitted with a coupling (3) for the drive shaft tube. The body of the connector also includes openings (6) that enable its connection to the mounting element via screws passing through these openings. This solution is intended for use in the automotive industry.

## Description

The invention applies to a modular connector for an automotive drive shaft. The invention also pertains to a drive shaft containing the aforementioned connector. In one of the aspects, the invention concerns the design of an automotive drive shaft reinforced with carbon fiber composite in the area of attachment of a mounting component placed at the end of the shaft to the carbon fiber tube. Depending on the type of shaft, the mounting component may serve as a pipe connector, a sliding joint, a spline joint shaft, a tripod joint for a flexible coupling, or a splined shaft with bearing support for the shaft. This solution is applicable in the automotive industry.

Drive shafts are rotating components in various machines and vehicles, operating at different speeds. Drive shafts are used to transfer torque from the engine to the drivetrain system, such as the gearbox, differential, and wheels, enabling the vehicle to move. Drive shafts typically include elements such as cross joints, homokinetic joints, sliding couplings, intermediate couplings, and flexible connectors. In most cases, the drive shaft is constructed from a cylindrical tube with a circular cross-section. The shape of the shaft affects its strength and ride comfort. Rotating components without an appropriate streamlined shape can cause unwanted noises, which may reduce the comfort during travel.

The solution according to the invention pertains to a connector that enables efficient and durable coupling of an aluminum or carbon tube with a steel mounting component, such as a shaft, and with an aluminum insert featuring internal profiling. The key element of the invention is a securing system for the connections using fixing screws with Schnorr washers, which provides additional reinforcement and stability during operation. This connection can be applied to aluminum shafts, where the connector is welded to the aluminum shaft tube, as well as to composite shafts, such as carbon fiber shafts, where the connector insert can be bonded to the carbon tube using adhesive. Furthermore, the invention allows for weight reduction and facilitates easy disassembly and replacement of components in the event of a failure.

From the description of the Brazilian utility model no. BR202023007525 U2, a shaft designed for use in agricultural machinery and other related applications is known. The disclosed shaft consists of a half-shaft, a disc, and a fastening system using screws. The main feature of this model is a mechanism that allows the shaft to be separated into two distinct parts. The configuration of the screw-tip mechanism introduces a novel approach to shaft design, enabling it to be easily disassembled into two components. This is particularly advantageous for agricultural machinery and similar applications, as it provides a quick and reliable connection using screws, enhancing operational convenience and efficiency. Additionally, the process of separating and reassembling the shaft is simplified, making the system more user-friendly while reducing downtime and maintenance costs.

In the Chinese utility model description no. CN221838737 U, an innovative technical solution in the field of drive shaft connection assembly, particularly for simplifying shaft coupling, is disclosed. The described solution includes a drive shaft body and an external socket, with both ends equipped with connecting posts. On the outer surface of the socket, a limiting plate is present, and screws are placed on the upper and lower sides of the inner surface. Nuts are located on the external side of the screws, while the inner side of the external socket features a mounting socket. The upper and lower sides of the external connector are equipped with through slots containing a positioning limiting plate. A connection hole is located at the center of the front surface of the limiting plate. The device also includes a spring and a pressing plate that enable the movement of the limiting plate. This solution simplifies the installation and assembly of the drive shaft body while ensuring its durable and stable connection. Elements such as the connecting posts with limiting plates, screws with nuts, and the mounting socket work together to provide a robust and stable joint. Additional components like the pressing plate, spring, and limiting plate further enhance the functionality and reliability of the drive shaft connection.

From the German patent description no. DE102015108821 B3, a connecting element designed for the permanent connection of a shaft to a hub under constant torque, particularly for connecting tubes made of fiber-reinforced plastics, is known. The connecting element is shaped as a sleeve with internal and external surfaces bounded longitudinally by a first and second end face. To enable smooth and easy connection of the shaft to the hub, the inner surface of the sleeve features an internal curvature between the first and second end faces. This curvature is characterized by a convex profile along the longitudinal direction of the connecting element. When the shaft is inserted into the connecting element, the curvature is pushed outward, enabling secure and stable locking with the hub. The disclosed connecting element provides a strong and reliable connection for tubes made of fiber-reinforced plastics. Additionally, the internal curvature allows for gentle and easy assembly of the shaft with the hub while ensuring a secure fit. The design also ensures locking that eliminates the risk of shifting or disconnection of the components. This solution finds application in systems requiring durable connections of composite material components, particularly in the automotive, machinery, and aerospace industries.

Flexible coupling devices, systems, and methods for transmitting high torque loads and complex rotational motions between components or devices are disclosed in U.S. patent application no. US2024200611 A1. Specifically, the disclosure pertains to torque and complex rotational movements transferred from an engine through an input shaft to an output shaft via a flexible coupling with a polygonal shape. This coupling allows for operation with components or devices that are not coaxial with the input shaft. The flexible coupling device comprises a polygonal "ball-and-socket" system featuring a spherical, convex socket element that facilitates alignment adjustments through a pivot point. Rectangular, flat sliding plates are employed to ensure uniform load distribution. Additionally, elastomeric seals around the polygonal ball neck protect sensitive elements within a lubricated chamber. The disclosed coupling device enables the transmission of high torque loads and complex rotational motions between elements, even in the presence of misalignment. Its flexible design allows for greater layout freedom and increases tolerance to assembly errors. The combination of the "ball-and-socket" system, sliding plates, and elastomeric seals ensures efficient and reliable torque transfer while protecting sensitive components. This solution is suitable for applications requiring high precision and resistance to misalignment, such as in machinery, automotive, or energy industries.

Various drive shaft designs are known from the prior art. For example, U.S. patent application no. US2002032065 AA describes a drive shaft construction that enhances the connection between the main shaft body and the yoke. It uses serrated inserts and matching grooves to create a stronger and more secure connection. The production method for this drive shaft involves a press-fit assembly stage followed by a withdrawal stage to ensure proper assembly and alignment. This application utilizes a knurling technique on the outer surface of the insert to be pressed into the composite tube. The specific shape and height of the knurling profile aim to lock the insert during pressing and prevent rotation during shaft operation. In contrast, my solution avoids knurling and the cylindrical shape inside the tube, which does not fully address the issue of delamination of the carbon fiber layers within the tube. By using a specific internal shape for the tube, the strength is enhanced, and the insert's rotation is physically blocked.

The Chinese utility model description CN205315467 U discloses a drive shaft made of carbon fiber composite, consisting of a tube with pipe joints at both ends. One of the pipe joints is connected via a cross joint to a sliding sleeve. The other end of the drive shaft includes a flange joint, a cross joint, and a pipe joint embedded within the tube. The drive shaft tube is made from a carbon fiber composite material, combining carbon fibers and epoxy resin, providing high strength and durability, making the drive shaft more efficient and reliable. The utility model relies on joining a circular tube with a circular pipe joint through press-fit and/or adhesive bonding. However, the circular-to-circular connection does not eliminate the issue of delamination of carbon fiber between the respective layers of the tube. Delamination would prevent torque transfer between the driving and driven components. Using a polygonal connection solves this problem, as delamination at the tube ends becomes impossible due to the physical blocking of fiber displacement within the composite tube.

The U.S. patent application US20230143202 A1 describes a pipe joint as a mounting component used in vehicles for power transmission from the engine to the wheels. The invention concerns a pipe joint used in the drive shaft, which is connected to the drive shaft tube through adhesive bonding or tight fitting. In this solution, the tubular yoke is made from a pre-preg composite material, which is strong and lightweight. This material improves the performance and durability of the drive shaft.

In drive shafts, a common method for connecting components is male and female locks, which are used in intermediate, flange, and sliding joints. A sliding joint consists of a sleeve and a splined shaft. Depending on the design, some components have a female lock, while others have a male lock. Male/female locks are primarily used to mount the drive shaft to the gearbox and differential to transfer drive and establish a centering position for the shaft.

Drive shafts consist of a tube and side components attached to it. Tubes, rather than solid rods, are used because shafts are not solid in cross-section like rods. Torque transmission using a direct lock within a carbon fiber tube is practically impossible. This would require a lock to be screwed using screws threaded into a thick-walled composite tube. However, using such a lock is unfeasible due to the disruption of the composite tube structure during drilling. Threads are not directly made in composite tubes; instead, special steel sleeves with internal threads are pressed or bonded in place. The purpose of locks in joining two components is to center them, not to transfer torque between a composite tube and an inserted or pressed-in insert. In steel shafts, the element with a lock is connected to the steel tube by welding, brazing, or splines. Forming precise splines in a composite tube during its winding is impossible due to the nature of the fiber and the inability to achieve sharp or straight angles. Most methods known for steel tubes cannot be used for production and processing of composite tubes.

The invention aimed to develop a new universal drive shaft connector that enables the connection of an aluminum or carbon tube with a mounting component, such as a steel shaft, while achieving maximum weight reduction of the system and maintaining optimal strength parameters of the entire shaft. This is particularly intended for use in high-power and high-torque vehicles while ensuring an aerodynamic shaft shape that guarantees high user comfort and eliminates noise. Another goal was to enable the connection of steel execution elements with aluminum drive shaft tubes. The invention also aimed to produce a carbon fiber shaft with increased resistance to delamination between the fiber layers and the insert of the mounting component. The design sought to ensure that the torque would be transmitted across the entire cross-section of the carbon tube rather than progressively between layers, as is typical in round insert-to-tube connections. Additionally, the solution was intended to prevent drive loss in the event of insert loosening and to allow for both tight and loose fitting during assembly, with the possibility of utilizing adhesive bonding for the connection.

The essence of the invention is a modular connector for an automotive drive shaft, wherein the connector has a ring-shaped design made of metal, preferably aluminum, wherein the said connector comprises a body and a mount, and the connector's body is equipped on one side with a profiled socket corresponding to the shape of the mounting component, while on the opposite side, the connector is fitted with the mount for the drive shaft tube. The body of the connector includes holes allowing it to be fastened to the mounting component with screws passing through these holes.

The inclusion of recesses with screw holes in the modular drive shaft connector ensures stable and secure fastening to the mounting component and enhances its durability. The screw holes enable precise attachment of the mounting component, contributing to improved torque transmission and minimizing the risk of loosening during operation. This type of fastening prevents shifting or loosening under dynamic load conditions. Additional fastening via screws facilitates more effective transmission of driving forces without energy loss due to mismatches or loose connections, resulting in reduced vibrations and noise levels during drive shaft operation. The modular connection using screws allows for easier disassembly and replacement of components during servicing, reducing downtime and streamlining maintenance. The reliability and durability of this solution improve performance and extend the lifespan of the entire drivetrain system. Using aluminum for the connector reduces the overall weight of the system.

Preferably, the cross-section of the profiled socket is in the shape of a regular polygon inscribed in a circle, with the polygon having between 4 and 18 sides, ideally 14 sides, and the walls of the profiled socket being parallel to the axis of the connector.

The technical effect of using a profiled socket shaped as a regular polygon inscribed in a circle, particularly one with 12 to 14 sides, is the optimization of torque transmission and increased reliability of the automotive drive shaft connection. Such a profile better distributes the forces acting on the connection, reducing the risk of excessive wear and damage during operation. A polygon with a higher number of sides (especially 14 sides) allows for more uniform force transfer between contact surfaces, thereby reducing stresses and limiting localized loads. The regular polygon ensures a stable connection and improves assembly precision, minimizing play and vibrations, and particularly maintaining alignment between components. With even force distribution, the joint is more resistant to wear and material fatigue, increasing its lifespan. The profiling also simplifies the assembly and disassembly of components, which can reduce maintenance time.

Preferably, the modular connector's attachment on the drive shaft tube side is in the form of a recess designed for welding the drive shaft tube, preferably the mount and the tube are made of aluminum. It is particularly preferably if both the shaft tube and the connector mount are made of aluminum, in which case the connector can be welded to the shaft after the mounting component is preassembled onto the connector.

The effect of using a recess-style mount for the drive shaft connector, designed for welding an aluminum drive shaft tube, is the achievement of a durable, lightweight, and precisely fitted connection between the connector and the shaft. The recess ensures proper seating of the tube, enhancing the connection's stability and minimizing the risk of deformation or shifting during operation. The recess provides a contact surface tailored to the tube, enabling a strong bond during welding. Aluminum's lower density reduces the total weight of the structure while maintaining high strength. Using aluminum for the attached drive shaft tube reduces the overall weight of the system. Aluminum's natural resistance to corrosion extends the lifespan of the drivetrain components and decreases maintenance requirements. The recess allows for more precise seating of the tube and simplifies the welding process, shortening assembly time and improving its quality. It also reduces play and minimizes vibrations by maintaining alignment of the drive shaft components, which in turn reduces noise and enhances driving comfort. The use of a recess facilitates the centric welding of the aluminum tube to the drive shaft connector, resulting in a strong, lightweight, and operationally durable joint that translates into extended lifespan and improved efficiency of the drivetrain system.

Preferably, the mounting of the modular automotive drive shaft connector on the drive shaft tube side is additionally equipped with an insert adapted for attaching the drive shaft tube, preferably made of aluminum or composite material, such as carbon fiber.

The effect of using an insert for mounting the drive shaft connector, designed for connection with a composite shaft tube (particularly carbon fiber), is an increase in the strength and rigidity of the connection while simultaneously reducing the overall system weight. The application of a mounting insert in the automotive connector allows for the joining of a steel or aluminum element with a composite tube. The insert can be either circular or profiled, depending on the shape of the ends of the aluminum or carbon tube. An aluminum insert and a carbon shaft tube significantly reduce the weight of the structure, which translates to less engine load, lower fuel consumption, and improved vehicle dynamics. Carbon fiber offers an excellent strength-to-weight ratio, enabling the transmission of high loads without deformation, thereby increasing the precision and reliability of the connection. Composite materials like carbon fiber also have vibration-damping properties, reducing noise and vibrations in the drivetrain and improving ride comfort and stability. Composites, especially carbon fiber, are resistant to corrosion and material fatigue, extending the connection's lifespan and reducing the need for frequent replacements and maintenance. Reduced weight and increased rigidity of the drivetrain improve acceleration and vehicle maneuverability, which is particularly beneficial for sports and high-end vehicles.

Preferably, the insert has a cylindrical shape and is equipped with at least two centering rings with a circular cross-section.

Preferably, the insert of the modular automotive drive shaft connector has a shape approximating a cylinder and is equipped with at least one centering ring with a cross-section in the form of a substantially regular polygon with 8 to 20 sides. The shape of the connector's insert corresponds to the shape of the mounting sleeve inside the tube and is configured so that the connector with the insert is secured to the tube's mounting sleeve using either a tight fit and/or adhesive bonding.

Preferably, the centering ring of the automotive drive shaft insert has a cross-section in the shape of a regular polygon with 12 to 14 sides, most preferably 12 sides.

The use of 12 sides is the most optimal solution due to the mechanical strength of the connection, the cylindrical external shape of the composite tube, the minimal number of machining operations required for milling while preventing the rotation of the insert within the tube, the reduced risk of tube cracking at the polygonal edges, optimization of the production process during the winding of the composite tube, and the elimination of potential rotation between the layers of the composite tube.

Preferably, the insert of the modular automotive drive shaft connector contains at least two centering rings, with a section of the insert between the centering rings having a reduced profile that forms a chamber for adhesive application when inserted into the tube.

The use of two centering rings allows for the creation of a chamber between the insert and the tube, enabling the space to be filled with adhesive bonding. This configuration permits the use of either a tightly fitted insert or a press-fitted insert additionally secured with adhesive. Combining these two methods increases safety and prevents the insert from detaching from the composite tube. Drive shafts are subjected to various forces transmitted from the driving component to the driven component. Misalignment between mounting elements significantly impacts the drive shaft's performance and lifespan. The adhesive ensures a permanent bond between the tube surface and the insert surface, preventing any displacement.

In another aspect, the invention pertains to an automotive drive shaft characterized by a modular connector according to the invention, with the drive shaft tube made of aluminum permanently attached to the connector via welding or adhesive bonding, and a mounting component immovably and detachably connected to the connector.

The invention also includes an automotive drive shaft characterized by the following components: a modular connector made of aluminum, equipped with a cylindrical insert featuring two centering rings with a circular cross-section and a reduced-profile section between the centering rings that forms a chamber for adhesive application when inserted into the aluminum drive shaft tube; an aluminum drive shaft tube permanently bonded to the connector via adhesive; and a mounting component immovably and detachably connected to the connector.

Unexpectedly, it was found that an aluminum insert bonded to an aluminum drive shaft tube using adhesive exhibited the best strength parameters.

The invention also pertains to an automotive drive shaft characterized by the inclusion of a modular connector equipped with an insert, a drive shaft tube made of composite material, preferably carbon fiber, permanently bonded to the connector, and a mounting component immovably and detachably connected to the connector via the connector mounting.

Preferably, the automotive drive shaft tube includes an opening for injecting adhesive into the chamber formed by the reduced-profile section of the insert and the tube's internal lateral wall, preferably two openings symmetrically placed on opposite sides of the tube.

The use of two opposing openings allows adhesive to be injected through one opening and excess adhesive to exit through the opposite opening. Pressing the adhesive between the openings ensures the complete filling of the chamber between the insert and the tube. Tests were conducted to evaluate chamber filling effectiveness based on the number and placement of openings, the number of centering rings, and the adhesive's viscosity. The most satisfactory results were achieved with two openings.

Preferably, the mounting component is a splined shaft for a joint, a splined shaft with bearing support for the drive shaft, a sliding joint, or a flexible joint yoke, and is preferably made of steel. The use of a connector with a mounting insert in a carbon tube enables the construction of various drive shaft designs depending on specific requirements. This solution allows the creation of short, long, segmented shafts, shafts designed to operate at increased angles, and shafts with extended operational ranges.

The advantage of the invention is its applicability to any type of drive shaft, including tubular joints, flange joints, splined shafts for joints, intermediate shafts used for mounting drive shaft supports, as well as sliding joints that allow the drive shaft to extend and retract during suspension operation. Each of the aforementioned components can be manufactured or adapted to include a mounting element with an insert corresponding to the shape of the carbon tube's mounting sleeve. It is also possible to adapt pre-made drive shaft components into a form that allows connection without welding or fusing.

The advantage of using the connector in drive shafts primarily lies in reducing the weight of the drive shaft and the ability to weld an aluminum shaft to the connector while attaching any mounting element to the other side of the connector. In the case of using a connector with an insert in composite drive shafts, the benefits of such a configuration are as follows: it increases the mechanical strength of the shaft, enhances the durability of the connection between the tube and the insert, automatically centers the connection of the insert with the composite tube, allows the insert to be installed via a tight fit and/or adhesive bonding, eliminates the issue of carbon fiber delamination at the tube ends after bonding with the insert, minimizes the risk of unwanted noise or hum caused by the non-aerodynamic shape of the rotating element, utilizes the technology of manufacturing composite tubes with a regular polygonal cross-section exclusively at the tube ends, and extends the lifespan of the drive shaft under dynamic load conditions.

The invention is presented in exemplary embodiments that do not limit its scope, along with illustrations depicting its structure and component:
- fig. 1: illustrates a universal connector from the first exemplary embodiment, equipped with screw holes for mounting the mounting component, shown in an axonometric view (A) and a top view (B),
- fig. 2: illustrates cross-sections through the part of the connector encompassing a profiled socket with different numbers of polygonal sides: 8-sided (A), 16-sided (B), and 18-sided (C),
- fig. 3: illustrates a drive shaft from the second exemplary embodiment, where the aluminum shaft tube is welded to the recessed connector, also made of aluminum, with a joint shaft as the functional component attached to the connector,
- fig. 4: illustrates a mounting component in the form of a steel joint shaft containing a mount shaped to correspond to the profiled socket of the connector,
- fig. 5, 6: represent two projections illustrating components used to connect the automotive drive shaft connector with the mounting component,
- fig. 7: illustrates a connector with a mounting component and screws,
- fig. 8: illustrates a connector with a recessed mount and an aluminum shaft, showing both elements separately (A) and welded together (B),
- fig. 9: illustrates a drive shaft with a connector from the third exemplary embodiment, where the connector is equipped with an insert featuring two centering rings with a circular cross-section and a shaft tube provided with holes for injecting adhesive,
- fig. 10 i 11: They depict a drive shaft connector from the fourth exemplary embodiment with a profiled insert featuring two centering rings, shown in an axonometric view and a side view, along with an attached mounting component,
- fig. 12: illustrates a drive shaft connector according to the invention, where the insert is equipped with a single centering ring with a dodecagonal cross-section, along with an attached mounting component,
- fig. 13: presents a side view of a composite shaft with a connector and inserts, including two cross-sectional views,
- fig. 14: illustrates tested cross-sectional profiles of mounting component inserts with varying numbers of polygonal sides,
- fig. 15: illustrates the vertex angle α for the cross-section of the insert in the shape of a dodecagon,
- fig. 16: illustrates a drive shaft from the fifth exemplary embodiment, where the insert is equipped with two centering rings with a dodecagonal cross-section.

### Example 1

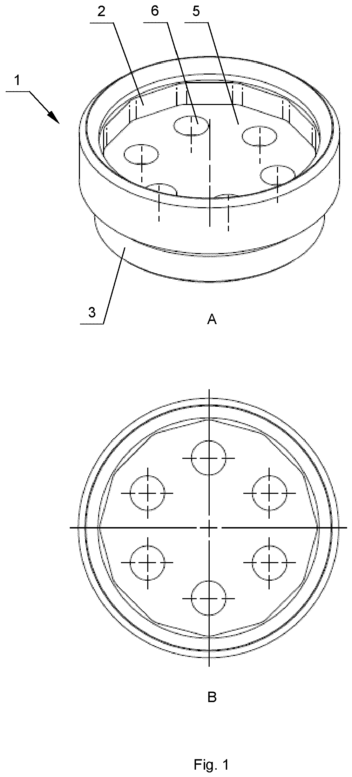

The first embodiment, depicted in Fig. 1A, involves a universal automotive drive shaft connector (1) in the form of a ring made of aluminum. The connector can also be made of another metal; however, using aluminum offers the advantage of reducing the weight of the shaft and, in the case of aluminum tubes (4), enabling them to be welded to the connector (1). In this example, the connector (1) features a mounting section (2) on the functional side to accommodate a matching-shaped mounting component (7), while the opposite side includes a mounting section (3) for the drive shaft tube (4), which in this case is in the form of a recess with a diameter tailored to the drive shaft tube (4). The connector (1) is equipped with screw holes (6), which are located in a recess (5) that, in this instance, serves as a partition between the profiled socket (2) and the mounting section (3). Tests revealed that the optimal number of screw holes (6) is six, but the number of these holes can vary.

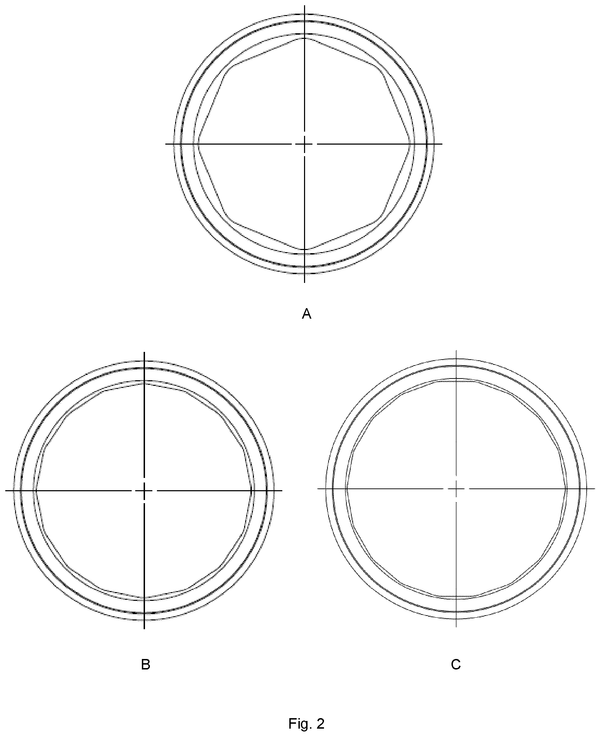

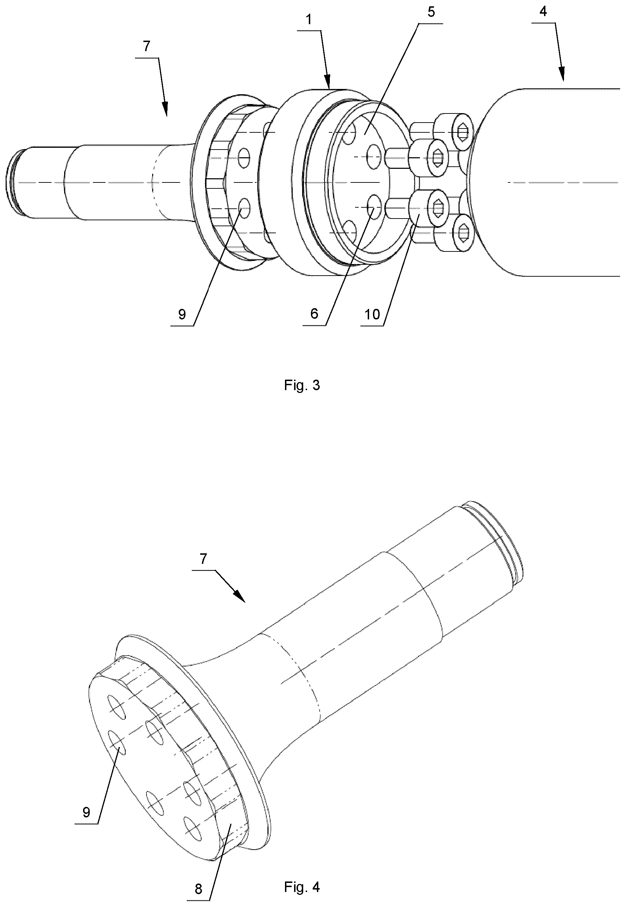

The cross-section of the profiled socket (2) in this example is a regular dodecagon inscribed in a circle, as shown in Fig. 2B. The shape of the profiled socket (2) corresponds to the shape of the profiled mount (8) of the mounting component (7). Tests were also conducted on profiled sockets (2) with cross-sections in the form of other regular polygons inscribed in a circle, such as an octagon (Fig. 3A), hexadecagon (Fig. 3B), or octadecagon (Fig. 3C). However, the best strength results were obtained for a range of 12 to 14 sides. For polygons with a number of sides between 4 and 18, the strength results were acceptable. However, with a profiled socket (2) having more than 18 sides, a significant decrease in strength was observed because the cross-section of such a shaft was too close to a circle. Conversely, with fewer than 4 sides, excessive stresses were observed on the individual walls of the profiled mount (8) of the mounting component (7).

### Example 2

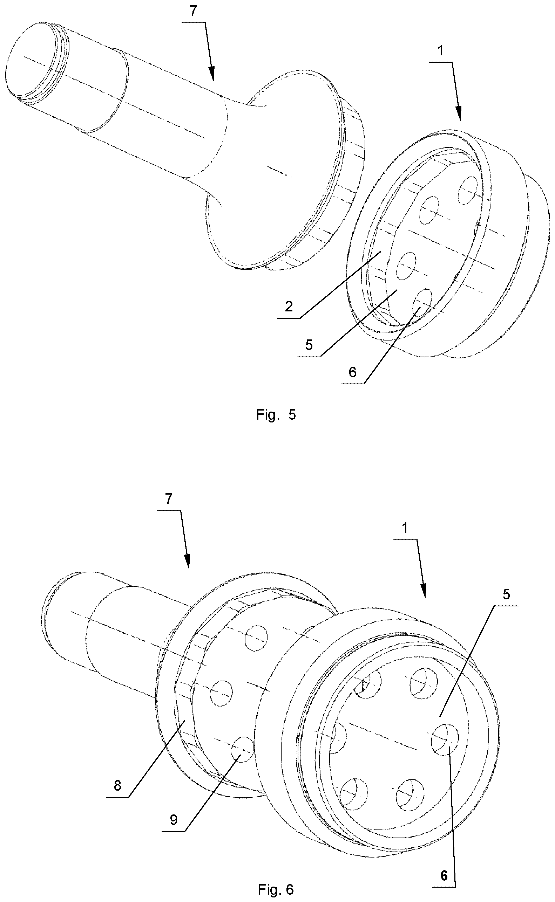

The second embodiment, illustrated in Fig. 4, involves an automotive drive shaft consisting of three components: a universal connector (1) as described in Example 1, connected to an aluminum drive shaft tube (4) and a mounting component (7). In this example, the connection between the connector (1) and the tube (4) is achieved through the mounting section (3) in the form of a recess. The mounting component (7) in this example is a splined joint shaft, but it can be replaced with other mounting components, such as a splined shaft with bearing support for the drive shaft, a sliding joint, or a flexible joint yoke. The key feature is that the mounting component (7) is equipped with a profiled mount (8), as shown in Figs. 3-7, that matches the shape of the profiled socket (2) of the connector (1). The mounting component (7) can be made from various materials. Typically, steel is used due to its good strength properties at a competitive cost. However, depending on the drive shaft's application, other materials such as titanium may also be used. Once the mounting component (7) is placed in the profiled socket (2), the two components are fastened together, for example, with screws (18) passing through the screw holes (6) in the connector (1). The arrangement of the screw holes (6) in the connector (1) corresponds to the arrangement of threaded holes (9) in the mount (8) of the mounting component (7).

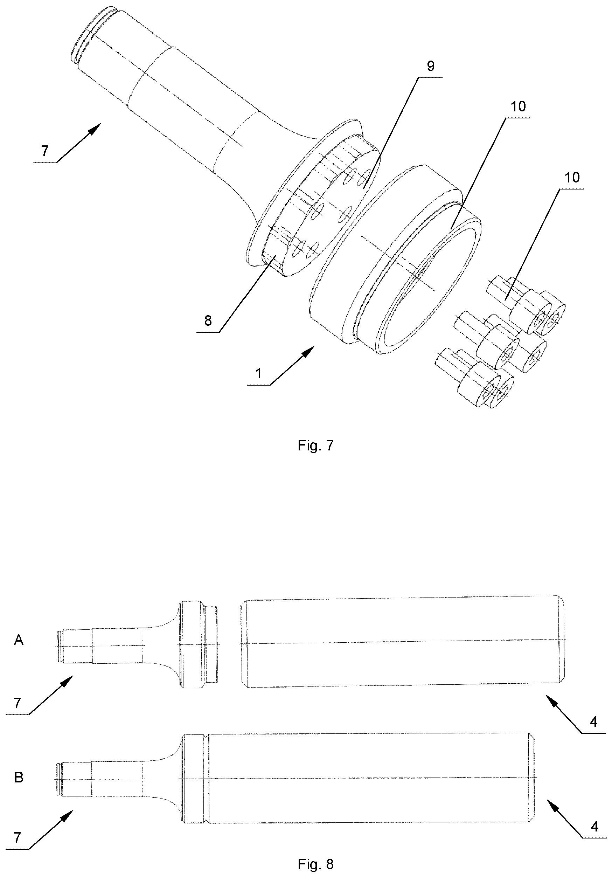

Fig. 8 provides a side view of the automotive drive shaft, which consists of three components: the connector (1) and the mounting component (7) prior to being welded to the aluminum tube (4) (A), and the connector (1) with the mounting component (7) welded to the aluminum tube (4) (B).

### Example 3

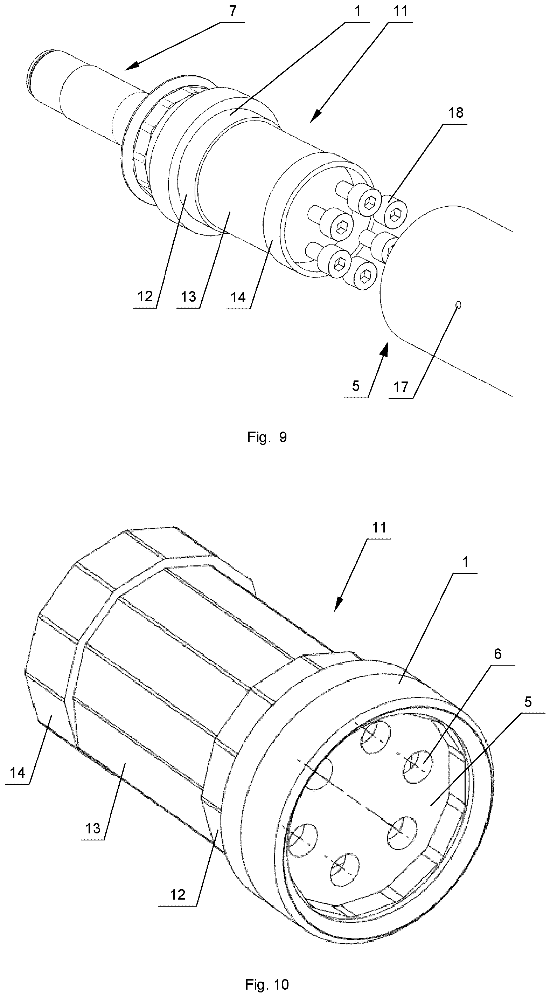

The third embodiment, illustrated in Fig. 9, presents an automotive drive shaft connector (1) with an insert (11) featuring two centering rings (12, 14) with a cylindrical shape and a reduced-profile section (13) located between them. In this example, the connector (1) is equipped with screw holes (6) for securing the mounting component (7) with screws (18). The connector includes a recess (5) in the form of a partition equipped with screw holes (6) for the screws (18). As mentioned in the previous examples, alternatives to screwed connections (18) can also be used in similar applications.

The side wall of the aluminum fiber tube (15) is equipped with one or more holes (17), preferably two holes (17) symmetrically placed on opposite sides of the tube (15). In this preferred configuration, once the insert (11) is positioned in the mounting sleeve (16), adhesive is introduced through one of the holes (17) into the adhesive chamber. As the chamber fills, any excess adhesive exits through the hole (17) on the opposite side.

### Example 4

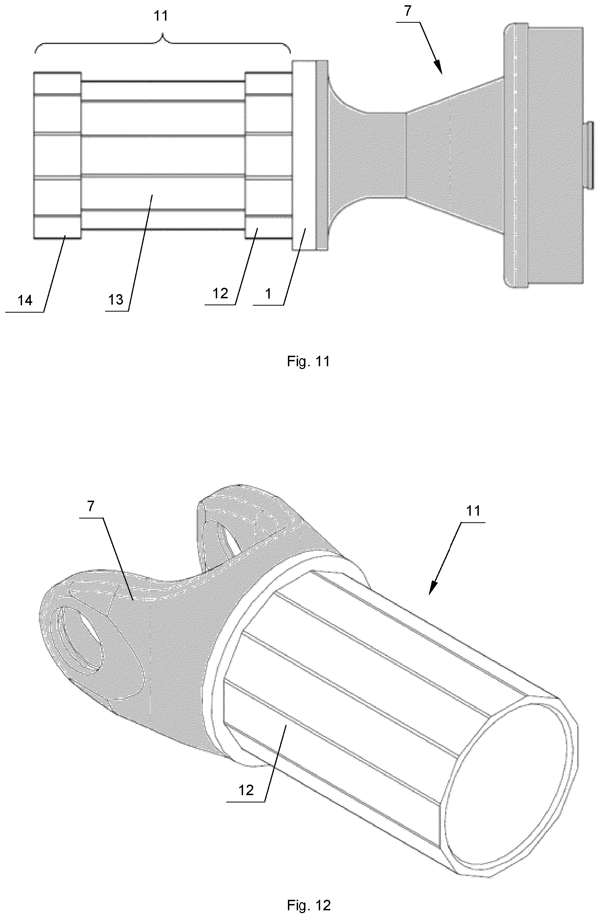

The automotive drive shaft connector (1) in the fourth exemplary embodiment, illustrated in Figs. 10 and 11, is equipped with an insert (11) featuring two profiled centering rings (12, 14) with a shape approximating a cylinder and a reduced-profile section (13) located between the rings (12, 14). This reduced-profile section (13) can be profiled or circular. In this example, the connector (1) also includes screw holes (6) located in a recess (5) in the form of a partition.

Fig. 12, in turn, illustrates another version of the connector (1) with a profiled insert (11). In this case, the insert (11) has only one profiled centering ring (12), and the connector (1) is shown with an attached mounting component (7) in the form of a splined joint shaft. The connector (1) with the insert (11) depicted in Fig. 12 is similar to the one shown in Figs. 10 and 11, with the difference that the insert (11) in this version is equipped with only one centering ring (12). In this case, when placing the insert (11) in a carbon tube (4), a thin layer of adhesive is applied to cover the entire insert, and a tight-fit method is utilized.

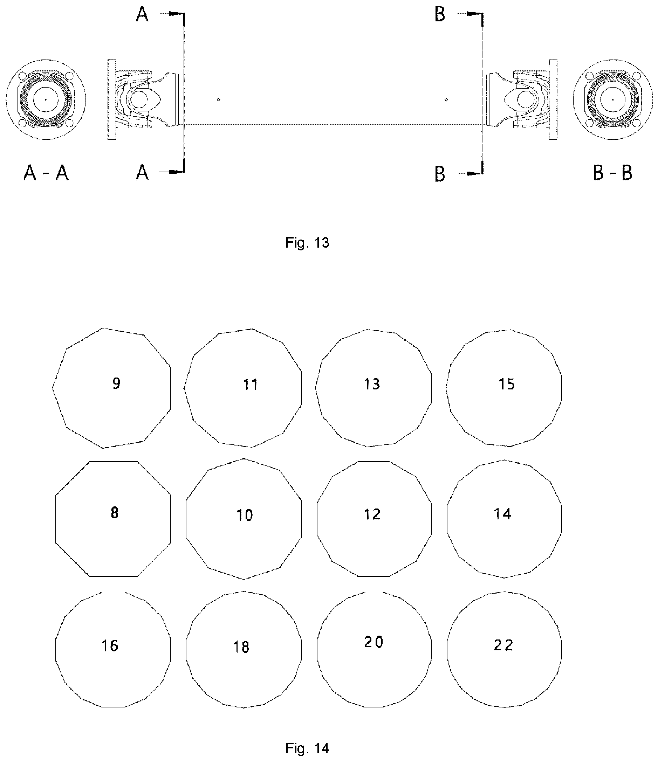

Tests were conducted on connector (1) inserts (11) with profiled external walls having cross-sections with varying numbers of polygonal sides. The results showed that inserts (11) with fewer than 8 sides were unsuitable for practical use. Such designs exhibited high stresses in the carbon fiber of the tube (15) at the sharp edges formed by the polygon vertices, and it was also impossible to achieve a circular shape in the wound fiber. Conversely, inserts (11) with cross-sections having more than 20 sides were also found to be impractical due to an increased risk of rotation of the insert (11) within the carbon fiber tube (15) under high torque values. Cross-sections of the insert with 8 to 20 sides (illustrated in Fig. 14) were divided into three groups based on the number of sides: the first group included 8 to 11 sides, the second 12 to 14 sides, and the third 15 to 20 sides. Table 1 presents the results of the tests evaluating various functional parameters of the solutions, including mechanical strength, shape cylindricity, production difficulty, risk of rotation within the tube (15), risk of tube (15) fracture at the polygonal edges, imperfections in the carbon fiber structure during winding, flexibility in adjusting the tube (15) thickness while maintaining a cylindrical shape, the amount of fiber required to achieve a cylindrical shape, production cost, production time, wall thickness from the polygon vertex to the tube's (15) outer diameter, and the potential for rotation between layers.

**Table 1. Influence of insert cross-section on operating conditionse**

| Parametry | Number of insert angles | | |
|---|---|---|---|
| | 8-11 | 12-14 | 15-20 |
| Mechanical strength | 3 | 4 | 3 |
| Cylindrical shape | 2 | 3 | 4 |
| Production difficulty | 2 | 2 | 4 |
| Risk of rotation inside the tube | 1 | 2 | 4 |
| Risk of tube cracking at n-angle | 4 | 3 | 2 |
| Imperfections in the carbon fiber structure during winding of the shape | 4 | 2 | 1 |
| Flexibility in adjusting the thickness of the tube while maintaining a cylindrical shape | 1 | 3 | 4 |
| Amount of fiber required to achieve a cylindrical shape | 4 | 2 | 2 |
| Production cost | 4 | 2 | 4 |
| Production time | 4 | 2 | 3 |
| Wall thickness from polygon vertex to outer tube diameter | 4 | 2 | 1 |
| Susceptibility to rotation between layers | 1 | 2 | 4 |
| Legend description: 1 - low/small; 2 - medium; 3 - good/large; 4 - very good/very large | | | |

The data presented in Table 1 demonstrate that the best functional parameters were achieved with an insert (11) cross-section shaped as a polygon with 12 to 14 sides. Inferior results were obtained for cross-sections with both fewer sides (8 to 11) and more sides (15 to 20). From a usability perspective, inserts (11) with a polygonal cross-section of 12 to 14 sides achieved the highest mechanical strength, excellent shape cylindricity, satisfactory risk of tube (15) fracture at the polygonal edges, high flexibility in adjusting the thickness of the tube (15) while maintaining its cylindrical shape, relatively low production costs, and rapid production times. Another important desired parameter was the low susceptibility of the insert (11) to rotation between layers.

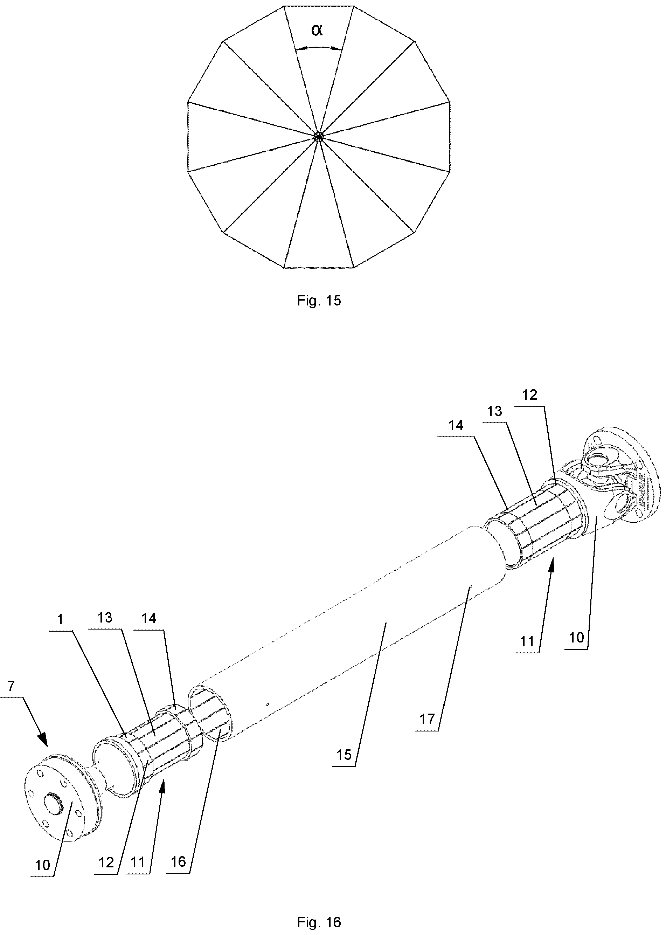

Additionally, tests were conducted to evaluate the effect of the number of sides in the insert (11) cross-section on the composite drive shaft tube (15) based on its radius (ranging from 30 mm to 40 mm). The results indicated that the radius had no impact on the outcomes related to the number of insert sides, as the vertex angles (α) between the radii of the polygon vertices (illustrated in Fig. 15) forming the cross-section of the insert (11) are identical for different radii of the composite drive shaft tubes (15). Thus, the results for smaller radii were the same as for larger ones.

**Table 2. Measures of angles between vertex radii of the polygon forming the cross-section of the insert depending on the number of angles**

| Tube radius | Number of angles | | | | | | | | | | |
|---|---|---|---|---|---|---|---|---|---|---|---|
| | 8 | 9 | 10 | 11 | 12 | 13 | 14 | 15 | 16 | 18 | 20 |
| 30 mm | 45° | 40° | 36° | ~32,7° | 30° | ~27,7° | ~25,7° | 24° | 22,5° | 20° | 18° |
| 35 mm | 45° | 40° | 36° | ~32,7° | 30° | ~27,7° | ~25,7° | 24° | 22,5° | 20° | 18° |
| 40 mm | 45° | 40° | 36° | ~32,7° | 30° | ~27,7° | ~25,7° | 24° | 22,5° | 20° | 18° |

### Example 5

Fig. 16 illustrates a drive shaft composed of a connector (1) with an insert (11) and a tube (15) reinforced with carbon fiber. In this case, the carbon fiber tube (15) has a radius of 35 mm, and at the ends of the tube (15), there are two mounting components (7) - a splined joint shaft (shown on the left side of Fig. 13) and a tubular joint (shown on the right side of Fig. 13). Each mounting component (7) includes a body (10) connected to the connector (1), which is equipped with an insert (11) in a shape approximating a cylinder, with a length of 120 mm, though the length of the insert (11) can vary and is typically in the range of 40 to 140 mm. The insert (11) is equipped with two centering rings (12, 14) with a cross-section in the form of a regular dodecagon. The cross-sectional shape of the centering rings (12, 14) of the insert (11) can also be a polygon with a number of sides ranging from 8 to 20.

The first centering ring (12) is located near the connector (1), while the second centering ring (14) is at the end of the cylindrical extension of the insert (11). Between the centering rings (12, 14) is a zone with a smaller diameter (13), reduced by 0.2 to 2 mm compared to the diameter of the centering rings (12, 14). The insert (11) of the connector (1) is secured to the mounting sleeve (16) of the carbon fiber (composite) tube (15) using a tight fit of the centering rings (12, 14) and adhesive bonding. Once the insert (11) is placed in the mounting sleeve (16) of matching shape inside the tube (15), an adhesive chamber is formed. The adhesive is applied directly to the insert (11) before it is inserted into the tube (15).

In an preferred embodiment, the side wall of the carbon fiber tube (15) is equipped with one or more holes (17), preferably two holes (17) symmetrically located on opposite sides of the tube (15). In this favorable configuration, once the insert (11) is placed in the mounting sleeve (16), the adhesive is injected through one of the holes (17) into the adhesive chamber. Once the chamber is filled with adhesive, any excess exits through the hole (17) on the opposite side.

### Example 6

Comparative strength tests were conducted on three drive shafts from Examples 2, 3, and 5 to evaluate their resistance to static and dynamic torque loads. Each shaft was subjected to maximum load conditions leading to its failure. The tests were performed at Gdańsk University of Technology in the specialized LINTE^2 laboratory, utilizing a dynamometer equipped with an angular gearbox to which one end of the shafts was mounted, while the other end was fixed using a support structure.

The purpose of the tests was to verify the strength and compare the three different drive shaft constructions. The primary goal was to assess the maximum static and dynamic strength of carbon fiber shafts and compare them to the results for aluminum shafts and a reference steel shaft. During the tests, various components were evaluated, including adhesive joints, automotive drive shaft connectors, tubes, universal joints, and screws. Any of these elements could fail during the destructive testing process. The results of the conducted tests are presented below in Table 3.

**Table 3. Results of Comparative Strength Tests**

| Designation | Reference 1 | Reference 2 | Example 5 | Example 2 | Example 3 |
|---|---|---|---|---|---|
| Material and Connection Type | Steel Driveshaft | Carbon Driveshaft | | Aluminium Driveshaft | |
| | Welded | Bonded | Bonded | Welded | Bonded |
| Insert shape | Circular | Circular | Formed Dodecagonal Shape | Circular | Circular |
| Adhesive Chamber | None | None | Present | None | Present |
| Weight | 12 kg | 6 kg | | 7,5 kg | |
| Max Torque / Time to Failure | 7201 Nm / ≈ 3 min | 3168 Nm / ≈ 20 min | 3821 Nm / ≈ 2 min | 4992 Nm / ≈ 3.5 min | 5806 Nm / ≈ 13 min |
| Damaged Component | No damage, steel screws sheared. | Bonded connection | Carbon fiber tube | Weld | Bonded connection |

The test results indicate that the methods of connecting the shaft to the mounting component (bonding or welding), the design of the insert (circular or profiled), and the materials used for the mounts (aluminum or steel) significantly affect the shaft's strength. The initial tests revealed much lower strength in carbon fiber shafts without an adhesive chamber and with circular inserts (3168 Nm) compared to steel shafts (7201 Nm). Based on the collected data, a drive shaft connector was developed that allows the assembly of tubes made from various materials, such as carbon fiber or aluminum. In subsequent tests aimed at evaluating the strength of the connection used in a composite shaft with a profiled insert (as in Example 5), the design successfully addressed the issue of delamination in the first layer of the composite tube. Good strength results were obtained, with maximum torque reaching 3821 Nm.

Tests were also conducted on aluminum shafts. Unexpectedly, it was found that an aluminum shaft bonded to the automotive connector using adhesive introduced through side holes into the chamber exhibited greater torsional strength than the welded aluminum shaft. The welded aluminum shaft fractured at the weld during torsional testing at a torque of 4992 Nm, while the bonded shaft failed at the adhesive connection after 13 minutes of twisting at 5806 Nm. However, it should be noted that at 5200 Nm, the aluminum tube began to twist.

After analyzing the results, it was concluded that welding weakens the aluminum tube at the joint, and the value of 4992 Nm was very close to the critical point at which the aluminum tube began twisting and was near failure. Surprisingly, the absence of welding does not reduce the strength of the aluminum tube, allowing its full material properties to be utilized. This contributed to achieving very high torque values. The bonding method demonstrated very high effectiveness in connecting different materials, such as carbon fiber and aluminum. The conducted static and dynamic tests confirmed the high strength of carbon fiber shafts when using a profiled insert. They also showed that carbon fiber shafts with a specific fiber arrangement and tube structure were capable of transmitting high torque values. In the case of carbon fiber shaft failure, the damage to the tube is irreversible and results in a loss of drive. For the aluminum shaft, after achieving a torque of 5806 Nm, the bonded connection with a circular insert became very heated due to internal friction. After the drive shaft cooled, the compromised bonded structure was able to transmit a gradually increasing torque up to 4704 Nm over a duration of 3.5 minutes.

The obtained results confirmed the high effectiveness of the bonding method and the strength of the automotive drive shaft connector when configured with inserts cooperating with materials such as carbon fiber and aluminum. The challenge of torque transmission using connectors and bonding methods was successfully resolved. The studies confirmed that the strength of the automotive connector and the bonding method significantly exceed the strength of the composite tube, which was surprisingly demonstrated by testing an aluminum shaft sample constructed using the bonding methods typically used for carbon fiber shafts.

### List of Designations:

- 1 -: Automotive drive shaft connector
- 2 -: Profiled socket
- 3 -: Drive shaft tube mounting
- 4 -: Aluminum drive shaft tube
- 5 -: Recess
- 6 -: Screw holes
- 7 -: Mounting component
- 8 -: Mounting component attachment
- 9 -: Threaded holes in the mounting component
- 10 -: Body
- 11 -: Insert
- 12 -: First centering ring of the insert
- 13 -: Reduced-profile section of the insert
- 14 -: Second centering ring of the insert
- 15 -: Drive shaft tube, primarily composite
- 16 -: Mounting sleeve of the composite drive shaft tube
- 17 -: Hole for adhesive injection
- 18 -: Screw

## Claims

1. An automotive drive shaft modular connector (1), **wherein** the connector (1) has a ring-shaped design made of metal, preferably aluminum, wherein the said connector comprises a body (5) and a mount (3), and the body (5) is equipped on one side with a profiled socket (2) corresponding in shape to the mount (8) of a mounting component (7), and on the opposite side, the connector (1) is equipped with a mount (3) for a drive shaft tube (5, 15), and the body (5) of the connector (1) is provided with screw holes (6) that allow it to be connected to the mounting component (7) using screws (18) passing through these holes (6).

2. The modular connector according to claim 1, **wherein** a cross-section of the profiled socket (2) is in the shape of a regular polygon inscribed in a circle, with the polygon having between 4 and 18 sides, preferably 14 sides, and the walls of the profiled socket are parallel to the axis of the connector.

3. The modular connector according to claim 1, **wherein** the mount (3) is in the form of a recess adapted for welding the drive shaft tube (5), preferably the mount (3) and the tube (5) are made of aluminum..

4. The modular connector according to any of claims 1-3, **wherein** the mount (3) is additionally equipped with an insert (11) adapted for connecting the drive shaft tube (5, 15), preferably made of aluminum or composite material, such as carbon fiber.

5. The modular connector according to claim 4, **wherein** the insert (11) has a cylindrical shape and is equipped with at least two centering rings (12, 14) with a circular cross-section.

6. The modular connector according to claim 4, **wherein** the insert (11) has a shape approximating a cylinder and is equipped with at least one centering ring (12, 14) with a cross-section in the form of a substantially regular polygon having between 8 and 20 sides, wherein the shape of the insert (11) corresponds to the shape of the mounting sleeve (16) inside the tube (15) and is configured such that the connector (1) with the insert (11) is secured to the mounting sleeve (16) of the tube (15) using a tight fit and/or adhesive bonding.

7. The modular connector according to claim 5, **wherein** the centering ring (12, 14) of the insert (11) has a cross-section in the shape of a regular polygon with 12 to 14 angles, most preferably 12 angles.

8. The modular connector according to any of claims 5 to 7, **wherein** the insert (11) comprises at least two centering rings (12, 14), and between the centering rings (12, 14) there is a section of the insert with a reduced profile (13), which, when inserted into the tube (15), forms a chamber for holding adhesive.

9. The modular connector according to claim 8, **wherein** the insert (11) has a cylindrical shape and is equipped with two centering rings (12, 14) with a circular cross-section, and between the centering rings (12, 14) there is a section of the insert with a reduced profile (13), which, when inserted into the tube (15), forms a chamber for holding adhesive.

10. An automotive drive shaft, **wherein** it comprises:
(a) a modular connector (1) as defined in any of claims 1 to 9,
(b) a drive shaft tube made of aluminum (5) permanently connected to the said connector (1) by welding or adhesive bonding, and
(c) a mounting element (7) detachably and fixedly connected to the connector (1).

11. The automotive drive shaft according to claim 10, **wherein** it comprises:
(a) a modular connector (1) made of aluminum, equipped with a cylindrical insert featuring two centering rings (12, 14) with a circular cross-section, and a section of the insert with a reduced profile (13) located between the centering rings (12, 14), which, when inserted into the aluminum drive shaft tube (5), forms a chamber for holding adhesive,
(b) an aluminum drive shaft tube (5) permanently connected to the said connector (1) by adhesive bonding, and
(c) a mounting element (7) detachably and fixedly connected to the connector (1).

12. An automotive drive shaft, **wherein** it comprises:
(a) a modular connector as defined in any of claims 4 to 6,
(b) a drive shaft tube made of composite material (15), preferably carbon fiber, wherein the tube (15) is permanently connected to the connector (1), and
(c) a mounting element (7) detachably and fixedly connected to the connector (1).

13. The automotive drive shaft according to any of claims 10 to 12, **wherein** the mounting element (7) is connected to the connector (1) by screws (18) passing through openings (6) in the body and fastened to the mounting (8) of the said mounting element (7).

14. The automotive drive shaft according to any of claims 10 to 12, **wherein** the tube (5, 15) includes at least one opening (17), preferably two openings (17), for introducing adhesive into the chamber formed by the section of the insert with a reduced profile (13) and the inner lateral wall of the tube (5, 15), preferably two openings (17) positioned symmetrically on opposite sides of the tube (5, 15).

15. The automotive drive shaft according to any of claims 10 to 14, **wherein** the mounting element (4) is a joint shaft with a spline, or a shaft with a spline and bearing for a shaft support, or a sliding connector, or a yoke for a flexible joint, preferably with the mounting element (7) made of steel.
